# EUROPÄISCHE PATENTANMELDUNG

(11) **EP 0 868 842 A1**
(43) Veröffentlichungstag der Anmeldung: **07.10.1998**
(21) Anmeldenummer: 98106123.7
(22) Anmeldetag: 03.04.1998
(51) Int. Cl.: A01C 7/08

(54) **Vorrichtung zum Ausbringen von partikelförmigem Gut**

(30) Priorität: 03.04.1997 DE 29705991 U
(71) Anmelder: Maschinenfabrik Rau GmbH, D-73235 Weilheim (DE)
(72) Erfinder: Fano, Reinhard, 72663 Grossbettlingen (DE); Sorg, Friedrich, 35418 Buseck-Opperod (DE)
(74) Vertreter: Manitz, Finsterwald & Partner

(57) **Zusammenfassung**

Vorrichtung zum Ausbringen von partikelförmigem Gut, insbesondere Saatgut, Düngemittel- oder sonstigem Wirkstoffgranulat, mit mindestens einem Vorratsbehälter (1) für das Gut, einer Vielzahl von mit dem Vorratsbehälter (1) verbundenen Ausbringeinrichtungen, einer Vorrichtung (6) zur Erzeugung eines Luftstroms, welcher zur Förderung des Gutes zu den Ausbringeinrichtungen oder zum Ausbringen anderweitig zu den Ausbringeinrichtungen geförderten Gutes dient, und mit einem einerseits mit der Luftstromerzeugungsvorrichtung (6) und andererseits über eine entsprechende Anzahl von Leitungen (5, 12) mit den Ausbringeinrichtungen verbundenen Verteiler (4) zur insbesondere gleichmäßigen Verteilung des Luftstromes auf die Ausbringeinrichtungen, wobei zur Ermöglichung einer einfachen und kostengünstigen Einzelabschaltung von Säscharen eine Luftstromschalteinrichtung (7) vorgesehen ist, an welche mindestens zwei der zwischen Verteiler (4) und den Ausbringeinrichtungen verlaufenden Leitungen (5) anschließbar sind, und über welche die Luftströme der angeschlossenen Leitungen (5, 12) ableitbar und/oder unterbrechbar sind.

## Beschreibung

Die vorliegende Erfindung betrifft eine Vorrichtung zum Ausbringen von partikelförmigem Gut, insbesondere Saatgut, Düngemittel- oder anderem Wirkstoffgranulat, mit mindestens einem Vorratsbehälter für das Gut, einer Vielzahl von mit dem Vorratsbehälter verbundenen Ausbringeinrichtungen, einer Vorrichtung zur Erzeugung eines Luftstromes, welcher zur Förderung des Gutes zu den Ausbringeinrichtungen oder zum Ausbringen anderweitig zu den Ausbringeinrichtungen geförderten Gutes dient, und mit einem einerseits mit der Luftstromerzeugungsvorrichtung und andererseits über eine entsprechende Anzahl von Leitungen mit den Ausbringeinrichtungen verbundenen Verteiler zur insbesondere gleichmäßigen Verteilung des Luftstromes auf die Ausbringeinrichtungen.

Derartige Vorrichtungen sind beispielsweise als Sämaschinen bekannt. Bei einer Variante dieser Sämaschinen wird mit einem Gebläse ein Luftstrom erzeugt, welcher das aus dem Vorratsbehälter über eine Dosiereinrichtung ausgegebene Saatgut zum Verteiler und von dort zu den Säscharen transportiert. Der Verteiler kann dabei als flacher, zylindrischer, vertikal ausgerichteter Hohlkörper ausgebildet sein, an dessen unterer Grundseite eine Eintrittsöffnung für den Luftstrom vorgesehen ist und der in seinem Mantel gleichmäßig über den Umfang verteilt angeordnete Austrittsöffnungen aufweist, an welche Verbindungsleitungen zu den Säscharen anschließbar sind. Bei gleichmäßiger Verteilung des Saatgutes im Förderstrom wird so auch eine gleichmäßige Verteilung des Saatgutes auf die Säscharen gewährleistet.

Bei einer anderen, insbesondere zur Einzelausbringung von Saatgut geeigneten Art von Sämaschinen sind die Säscharen jeweils mit einer Ausbringscheibe oder einem Ausbringrad versehen, durch welches die Saatkörner einzeln ausgebracht werden können. Hierfür werden die Saatkörner entweder durch Unterdruck einzeln in entsprechenden Ausnehmungen des Rades oder der Scheibe gehalten, oder durch Überdruck einzeln von der Scheibe oder dem Rad ausgeblasen. Der Unter- oder Überdruck wird durch eine Luftturbine erzeugt, an welche die einzelnen Säscharen über einen Verteiler angeschlossen sind. Der Verteiler gewährleistet dabei eine gleichmäßige Verteilung des Unter- oder Überdruckes auf alle Säscharen.

Zur Kenntlichmachung von Fahrgassen in dem ausgesähten Feld für das spätere Besprühen des Feldes mit Dünger oder sonstigen Wirkstoffen ist es bekannt, in entsprechenden zyklischen Abständen die im Bereich der Räder des zum Säen verwendeten Fahrzeuges befindlichen Säscharen abzuschalten, so daß in den Fahrspuren keine Aussaat erfolgt und diese dadurch nach dem Aufgehen der Saat wiedererkennbar sind. Zum Abschalten dieser Säscharen ist es bei pneumatisch fördernden Sämaschinen bekannt, in den entsprechenden Leitungen Absperrventile vorzusehen. Bei Einzelkornsähmaschinen ist es bekannt, die entsprechenden Ausbringräder oder -scheiben auskuppelbar auszugestalten, so daß sie beim Bewegen der Sämaschine nicht mitbewegt werden. Das Vorsehen von Absperrventilen ist kostenaufwendig und hat den Nachteil, daß zwischen Absperrventil und Verteiler eine Saatgutrestmenge angesammelt wird, die nach Wiedereinschalten der jeweiligen Säscharen auf einmal ausgebracht wird. Die auskuppelbare Ausgestaltung von Säscheiben oder -rädern von Einzelkornsämaschinen ist ebenfalls kostenaufwendig.

Der Erfindung liegt die Aufgabe zugrunde, eine Vorrichtung der eingangs genannten Art anzugeben, welche diese Nachteile nicht aufweist. Insbesondere soll eine Einzelabschaltung von Säscharen einfach und kostengünstig ermöglicht werden.

Diese Aufgabe wird dadurch gelöst, daß eine Luftstromschalteinrichtung vorgesehen ist, an welche mindestens zwei der zwischen Verteiler und den Ausbringeinrichtungen verlaufenden Leitungen anschließbar sind, und über welche die Luftströme der angeschlossenen Leitungen ableitbar und/oder unterbrechbar sind.

Der Erfindungsgedanke geht also dahin, zwei oder mehr der Säscharen gemeinsam abschaltbar auszugestalten und die entsprechenden Luftströme abzuleiten oder zu unterbrechen. Zur Kenntlichmachung einer Fahrgasse ist nämlich mindestens eine Säschar pro Rad der Sämaschine abzuschalten. Je nach Reifenbreite können es aber auch zwei oder drei Säscharen pro Rad sein, die erfindungsgemäß mit einer einzigen Schaltvorrichtung gemeinsam abschaltbar sind. Die Herstellungskosten werden hierdurch erheblich gesenkt. Außerdem erhöhen sich Zuverlässigkeit und Haltbarkeit der Vorrichtung, da weniger Teile erforderlich sind.

Die erfindungsgemäße Vorrichtung ermöglicht darüber hinaus nicht nur das zeitweilige Abschalten von zwei oder mehr Säscharen zur Kennzeichnung von Fahrgassen, sondern in sehr einfacher Weise auch eine dauernde Abschaltung von Säscharen, beispielsweise für eine Saatreihenabstandsverdoppelung, indem jede zweite Säschar dauernd abgeschaltet wird. Dies erfolgt einfach dadurch, daß die zugehörigen Leitungen vom Verteiler anstatt an die Säschar an die Schaltvorrichtung angeschlossen werden, wo die entsprechenden Luftströme einfach abgeleitet werden. Die zugehörigen Säscharen sind dann nicht mehr mit Luftstrom beaufschlagt und infolgedessen abgeschaltet. Die Verteilung des Saatgutförderstromes oder des Über- bzw. Unterdrucks auf die anderen Säscharen bleibt hierbei vorteilhafterweise unverändert, so daß keine weiteren Maßnahmen zur Korrektur der ausgebrachten Saatgutmenge erforderlich sind. Auch an dem Verteiler sind vorteilhafterweise keine Veränderungen erforderlich, das heißt, es kann derselbe Verteiler auch bei reduzierter Säscharanzahl verwendet werden. Dies führt wiederum zu einer erheblichen Kostensenkung.

Insbesondere bei Vorrichtungen, bei welchen der Luftstrom zur Förderung des Saatgutes zu den Ausbringeinrichtungen verwendet wird, sind die abgeleiteten Luftströme mit dem Vorratsbehälter verbunden. Auf diese Weise wird das über den Verteiler verteilte, aber nicht an Säscharen weitergegebene Saatgut rückgeführt und für eine Wiederverwendung bereitgestellt. Bevorzugt münden die abgeleiteten Luftströme dabei im Bereich der Entnahmeöffnung des Vorratsbehälters. Hierdurch wird eine schnelle Abfuhr des rückgeführten Saatgutes gewährleistet und ein Aufstauen desselben verhindert.

Nach einer weiteren Ausgestaltung der Erfindung ist die Luftstromschalteinrichtung in dem Vorratsbehälter angeordnet. Dies ist platzsparend und vereinfacht die Rückführung von abgeleitetem Saatgut.

Nach einer weiteren Ausgestaltung der Erfindung umfaßt die Luftstromschalteinrichtung ein rohrförmiges Gehäuse mit seitlichen Ausnehmungen, an welche die Leitungen anschließbar sind. Ein solches Rohr läßt sich besonders gut in einem Vorratsbehälter unterbringen und kann zugleich vorteilhafterweise als Fallrohr für das rückgeführte Saatgut in den Behälter dienen.

Nach einer weiteren Ausgestaltung der Erfindung weist das Rohr mindestens ein Paar von einander gegenüberliegenden seitlichen Ausnehmungen auf, und ist in dem Rohr ein darin eingepaßter Einsatz mit mindestens einem Luftkanal vorhanden, welcher zwischen einer die einander gegenüberliegenden seitlichen Ausnehmungen verbindenden und einer diese trennenden Stellung beweglich ist. Durch den beweglichen Einsatz ist in einfacher Weise eine Unterbrechung des Luftstromes zwischen den gegenüberliegenden Ausnehmungen im Rohr möglich. Werden an jeweils eine Ausnehmung die vom Verteiler kommende Leitung und an die gegenüberliegende Ausnehmung die zur Säschar führende Leitung angeschlossen, so ergibt sich damit eine einfache Abschaltmöglichkeit für die angeschlossenen Säscharen.

Die Verwendung eines solchen Einsatzes ist insbesondere zur Fahrgassenausbildung vorteilhaft, da entsprechend der Reifenbreite zwei, vier oder mehr Säscharen in einfacher Weise gleichzeitig und zyklisch gesteuert schaltbar sind. Die Betätigung des Einsatzes kann dabei mechanisch, hydraulisch, pneumatisch oder elektrisch erfolgen. Insbesondere kann auch eine elektronische Steuerung vorgesehen sein, um die Abschaltung nach einem vorher eingebbaren Programm auszuführen.

Der Einsatz kann im Rohr beispielsweise axial zwischen Öffnungs- und Sperrstellung verschiebbar sein. Bei im Querschnitt kreisförmigem Einsatz und entsprechend ausgebildetem Rohr kann der Einsatz gegenüber dem Rohr aber auch verdrehbar sein.

Durch geeignete Aussparungen am Umfang des Einsatzes kann in der Unterbrechungsstellung zudem eine Ableitung des Luftstromes in das Rohr erfolgen. Eine Aufstauung von nicht verteiltem Saatgut wird so in unkomplizierter Weise vermieden. Das Rohr kann sowohl paarweise gegenüberliegende Ausnehmungen zur zeitweisen Abschaltung von Säscharen als auch einzelne seitliche Ausnehmungen zur Dauerabschaltung von einzelnen Säscharen sowie eine Kombination aus beiden aufweisen. Je nach Bedarf, ist so eine Vielzahl von Anwendungsmöglichkeiten in einfacher Weise realisierbar.

Ausführungsbeispiele der Erfindung sind in der Zeichnung dargestellt und werden nachfolgend beschrieben. Es zeigen, jeweils in schematischer Darstellung,
- Fig. 1: eine erste Variante einer erfindungsgemäßen Vorrichtung,
- Fig. 2: eine zweite Variante einer erfindungsgemäßen Vorrichtung,
- Fig. 3: eine Seitenansicht eines Details der erfindungsgemäßen Vorrichtung und
- Fig. 4: eine Draufsicht auf das Detail von Fig. 3.

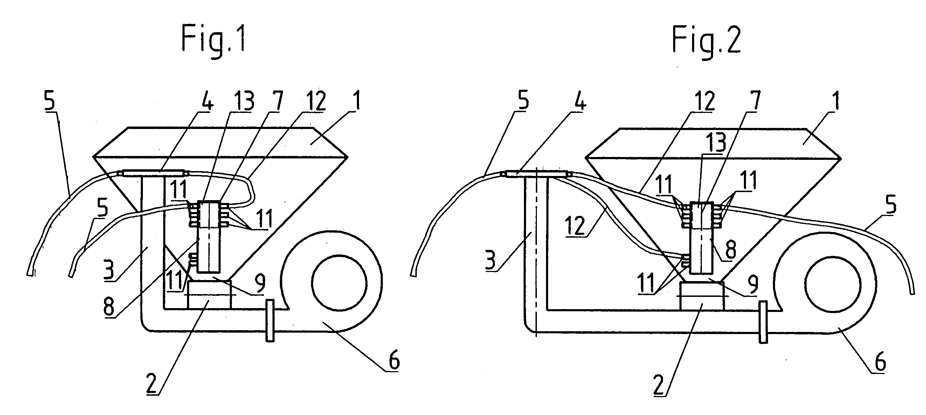

Das in Fig. 1 dargestellte Ausführungsbeispiel der Erfindung umfaßt einen Vorratsbehälter 1 für das auszubringende Gut, beispielsweise Saatgut oder Wirkstoffgranulat, welcher an seiner Unterseite trichterförmig ausgebildet ist und in eine Dosiereinrichtung 2 mündet. Die Dosiereinrichtung 2 ist ihrerseits an ein Förderrohr 3 angeschlossen, in welchem das auszubringende Gut zu einem Verteiler 4 gelangt, der sich bei diesem Ausführungsbeispiel innerhalb des Behälters 1 befindet. Über den Umfang des Verteilers 4 verteilt ist eine Vielzahl von Leitungen 5, 12 angeschlossen, die zu den Ausbringeinrichtungen, beispielsweise Säscharen führen. An das andere Ende des Förderrohres 3 ist ein Gebläse 6 angeschlossen, welches den Förderstrom für das auszubringende Gut erzeugt.

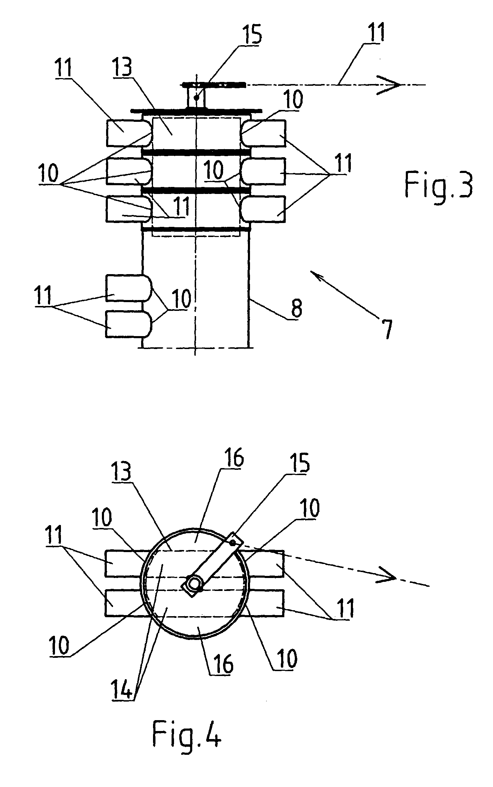

Ebenfalls innerhalb des Behälters 1 ist des weiteren eine Schalteinrichtung 7 angeordnet, die im einzelnen in den Fig. 3 und 4 dargestellt ist. Sie umfaßt im wesentlichen ein vertikales, im Querschnitt kreisförmiges Rohr 8, welches oberhalb der in die Dosiereinrichtung 2 mündenden Abzugsöffnung 9 angeordnet ist. Die Rohrwandung ist mit einer Vielzahl von Öffnungen 10 und darin angeordneten Anschlußstutzen 11 versehen, an welche sowohl zu den Ausbringeinrichtungen führende Leitungen 5 als auch Verbindungsleitungen 12 vom Verteiler 4 anschließbar sind. Ein Teil der Öffnungen 10 ist dabei paarweise einander gegenüberliegend angeordnet.

In das Rohr 8 eingepaßt und gegenüber diesem um die Rohrlängsachse verdrehbar geführt ist ein Einsatz 13, welcher eine Vielzahl von Luftkanälen 14 aufweist, die derart angeordnet sind, daß sie in einer Verdrehstellung des Einsatzes 13 gegenüber dem Rohr 8 jeweils mit zwei einander gegenüberliegend angeordneten Öffnungen 10 in der Rohrwandung fluchten und dadurch eine Verbindung der daran angeschlossenen Leitungen 5, 12 herstellen. Durch Verdrehen des Einsatzes 13 gegenüber dem Rohr 8 ist die Verbindung dieser beiden Leitungen 5, 12 unterbrechbar. Hierfür ist an dem Einsatz 13 ein Hebel 15 angeordnet, welcher auf beliebige Weise manuell oder automatisch betätigbar ist.

Wie man in Fig. 4 sieht, weist der Einsatz 13 umfangsseitige Aussparungen 16 auf. Das heißt, zwischen Einsatz 13 und Rohr 8 ist ein Freiraum vorhanden, welcher bei entsprechender Verdrehstellung des Einsatzes 13 gegenüber dem Rohr 8 eine Ableitung des vom Verteiler 4 kommenden Saatgutes in den Bereich oberhalb der Abzugsöffnung 9 des Behälters 1 ermöglicht.

Wie man insbesondere in Fig. 1 sieht, ist der Einsatz 13 so ausgebildet, daß er lediglich in einem oberen Bereich des Rohres 8 vorhanden ist. In diesem Bereich des Rohres 8 sind die Öffnungen 10 jeweils paarweise einander gegenüberliegend in der Rohrwandung vorgesehen, so daß die daran angeschlossenen Leitungen 5 und 12 durch die Kanäle 14 des Einsatzes 13 verbindbar sind. Der darunterliegende Abschnitt des Rohres 8 weist dagegen nur auf einer Seite Öffnungen 10 mit Anschlußstutzen 11 zum Anschluß von Verbindungsleitungen 12 auf. Abweichend hiervon kann das Rohr aber auch Öffnungen 10 mit Anschlußstutzen 11 in beliebiger anderer Kombination aufweisen. Insbesondere können Öffnungen 10 nur paarweise oder nur einseitig vorgesehen sein. Ebenso kann die Anzahl der paarweisen Öffnungen 10, im dargestellten Beispiel sechs, hiervon abweichend sein.

Das in Fig. 2 dargestellte Ausführungsbeispiel stimmt mit demjenigen von Fig. 1 weitgehend überein. Es ist lediglich der Verteiler 4 außerhalb des Behälters 1 angeordnet. Die Schalteinrichtung 7 mit dem Rohr 8 befindet sich aber auch hier innerhalb des Behälters 1 und insbesondere oberhalb der Abzugsöffnung 9.

Die Funktionsweise der erfindungsgemäßen Vorrichtung, beispielsweise beim Säen, ist vom Grundprinzip her dieselbe, wie bei bekannten Vorrichtungen. Über das Gebläse 6 wird ein Luftstrom erzeugt, welcher über das Förderrohr 3 zum Verteiler 4 gerichtet ist. Im Verteiler 4 wird der Luftstrom umgelenkt und gleichmäßig auf die an dessen Umfang angeschlossenen Leitungen 5 und 12 verteilt. Über die Dosiereinrichtung 2 wird der Luftstrom mit dem auszubringenden Gut beladen, wobei die Menge, insbesondere in Abhängigkeit von der Fahrgeschwindigkeit des Ausbringfahrzeuges, gesteuert wird. Über den Förderstrom gelangt somit eine gewünschte Menge des auszubringenden Gutes zu den einzelnen Ausbringstellen. Mit Hilfe der Schalteinrichtung 7 ist es nun jedoch möglich, bestimmte Ausbringeinrichtungen auf Wunsch gezielt abzuschalten. So ist es beispielsweise möglich, Fahrgassen zu erzeugen, indem die Säscharen hinter den Rädern des Ausbringfahrzeuges zyklisch abgeschaltet werden. Hierfür werden die zu diesen Säscharen führenden Leitungen 5 anstatt direkt an den Verteiler 4 an die Schalteinrichtung 7 angeschlossen, und zwar jeweils an eine Öffnung 10 eines Paares einander gegenüberliegender Öffnungen 10. An die jeweils andere Öffnung 10 eines Paares ist eine Verbindungsleitung 12 angeschlossen, die andererseits zu dem Anschluß des Verteilers 4 führt, an den ansonsten die jeweilige Säschar anzuschließen wäre. Auf diese Weise können insbesondere zwei, vier oder sechs Säscharen, die sich hinter den Rädern befinden, über die Schalteinrichtung 7 an den Verteiler 4 angeschlossen werden.

Durch Verdrehen des Einsatzes 13 der Schalteinrichtung 7 im Rohr 8 kann nun der Durchgang zwischen den jeweils einander zugeordneten Leitungen 5 und 12 geöffnet oder unterbrochen werden. Bei fluchtender Stellung der Kanäle 14 des Einsatzes 13 mit den Öffnungen 10 ist die Verbindung zwischen den jeweiligen Leitungen 5 und 12 hergestellt, und das vom Verteiler 4 kommende Saatgut wird in üblicher Weise über diese Säschar ausgebracht. Wird nun der Verteiler 13 beispielsweise um 90° verdreht, indem der Hebel 15 entsprechend betätigt wird, so ist der Durchgang zwischen den einander zugeordneten Leitungen 5 und 12 unterbrochen. Das vom Verteiler 4 kommende Saatgut prallt gegen den Einsatz 13 und fällt im Rohr 8 nach unten in den Bereich oberhalb der Abzugsöffnung 9. Da von dort das Saatgut rasch abgezogen und in die Dosiereinrichtung 2 geleitet wird, ist verhindert, daß sich das abgeleitete Saatgut im Rohr 8 aufstaut.

Mit der erfindungsgemäßen Vorrichtung ist es außerdem möglich, bestimmte Ausbringeinrichtungen, insbesondere Säscharen, dauerhaft abzuschalten. Hierfür werden an den Verteiler 4 anstelle der zugehörigen Saatgutleitungen 5 Verbindungsleitungen 12 angeschlossen, die andererseits, wie in Figur 2 beispielhaft dargestellt, mit Anschlußstutzen 11 der Schalteinrichtung 7 verbunden werden, die sich unterhalb des Einsatzes 13 befinden und denen keine gegenüberliegende Öffnung zugeordnet ist. Das über das Förderrohr 3 dem Verteiler 4 zugeführte Saatgut wird bei dieser Variante weiterhin gleichmaßig auf die Leitungen 5 und 12 verteilt, wobei jedoch das in die Leitungen 12 geförderte Saatgut über das Rohr 8 der Schalteinrichtung 7 in den Behälter 1 rückgeführt wird. Durch diese Anordnung kann beispielsweise eine Verdoppelung des Reihenabstandes erreicht werden, ohne daß hierfür der Verteiler 4 ausgetauscht werden müßte.

In derselben Weise können mit der erfindungsgemäßen Vorrichtung auch mit Über- oder Unterdruck betriebene Einzelsämaschinen geschaltet werden. Hierfür werden die den zyklisch oder dauerhaft abzuschaltenden Säaggregaten zugeordneten Über- oder Unterdruckleitungen in entsprechender Weise über die Schalteinrichtung 7 geführt. Durch Verdrehen des Einsatzes 13 kann der Durchgang für den Unter- oder Überdruck auf Wunsch geöffnet oder unterbrochen werden. Ebenso können bestimmte Säaggregate dauerhaft abgeschaltet werden, indem die zugehörigen Leitungen anstatt an das Säaggregat an einseitige Öffnungen 10 der Schalteinrichtung 7 angeschlossen werden. Auch hier wird dadurch gewährleistet, daß keine Veränderung des Verteilers erforderlich ist, um bestimmte Säaggregate zyklisch oder dauerhaft abzuschalten. Durch geeignete Maßnahmen kann außerdem auch hier gewährleistet werden, daß die Verteilung der Luft auf die übrigen Säaggregate unverändert ist.

Die Betätigung der Schalteinrichtung 7 kann mechanisch von Hand oder über einen Bowdenzug erfolgen. Ebenso ist eine pneumatische, hydraulische oder elektrische Betätigung möglich. Bevorzugt ist insbesondere eine automatische Betätigung nach einem vorgebbaren Programm, welches Teil der üblichen Aussaatsteuerung ist.

Die erfindungsgemäße Vorrichtung ermöglicht in sehr kostengünstiger Weise eine nahezu beliebige Abschaltung bestimmter Ausbringeinrichtungen, insbesondere eine Fahrgassenabschaltung und eine Reihenabstandsverdoppelung. Die Schalteinrichtung ist in der Herstellung kostengünstig und im Betrieb zuverlässig. Sie gewährleistet vielfältige Variationsmöglichkeiten und ist schnell einsetzbar. Ein Aufstauen von rückgeführtem Fördergut wird vermieden.

### Bezugszeichenliste

- 1: Behälter
- 2: Dosiereinrichtung
- 3: Förderrohr
- 4: Verteiler
- 5: Leitung
- 6: Gebläse
- 7: Schalteinrichtung
- 8: Rohr
- 9: Abzugsöffnung
- 10: Öffnung
- 11: Anschlußstutzen
- 12: Verbindungsleitung
- 13: Einsatz
- 14: Luftkanal
- 15: Hebel
- 16: Aussparung

## Patentansprüche

1. Vorrichtung zum Ausbringen von partikelförmigem Gut, insbesondere Saatgut, Düngemittel- oder sonstigem Wirkstoffgranulat, mit mindestens einem Vorratsbehälter (1) für das Gut, einer Vielzahl von mit dem Vorratsbehälter (1) verbundenen Ausbringeinrichtungen, einer Vorrichtung (6) zur Erzeugung eines Luftstroms, welcher zur Förderung des Gutes zu den Ausbringeinrichtungen oder zum Ausbringen anderweitig zu den Ausbringeinrichtungen geförderten Gutes dient, und mit einem einerseits mit der Luftstromerzeugungsvorrichtung (6) und andererseits über eine entsprechende Anzahl von Leitungen (5, 12) mit den Ausbringeinrichtungen verbundenen Verteiler (4) zur insbesondere gleichmäßigen Verteilung des Luftstromes auf die Ausbringeinrichtungen,
dadurch **gekennzeichnet**,
daß eine Luftstromschalteinrichtung (7) vorgesehen ist, an welche mindestens zwei der zwischen Verteiler (4) und den Ausbringeinrichtungen verlaufenden Leitungen (5) anschließbar sind, und über welche die Luftströme der angeschlossenen Leitungen (5, 12) ableitbar und/oder unterbrechbar sind.

2. Vorrichtung nach Anspruch 1,
dadurch **gekennzeichnet**,
daß die abgeleiteten Luftströme mit dem Vorratsbehälter (1) verbunden sind.

3. Vorrichtung nach Anspruch 2,
dadurch **gekennzeichnet**,
daß die abgeleiteten Luftströme im Bereich der Entnahmeöffnung (9) des Vorratsbehälters (1) münden.

4. Vorrichtung nach einem der vorhergehenden Ansprüche,
dadurch **gekennzeichnet**,
daß die Luftstromschalteinrichtung (7) in dem Vorratsbehälter (1) angeordnet ist.

5. Vorrichtung nach einem der vorhergehenden Ansprüche,
dadurch **gekennzeichnet**,
daß die Luftstromschalteinrichtung (7) ein rohrförmiges Gehäuse (8) mit seitlichen Ausnehmungen (10) umfaßt, an welche die Leitungen (5, 12) anschließbar sind.

6. Vorrichtung nach Anspruch 5,
dadurch **gekennzeichnet**,
daß das Rohr (8) mindestens ein Paar von einander gegenüberliegenden seitlichen Ausnehmungen (10) aufweist, und daß in dem Rohr (8) ein darin eingepaßter Einsatz (13) mit mindestens einem Luftkanal (14) vorhanden ist, welcher zwischen einer die einander gegenüberliegenden seitlichen Ausnehmungen (10) verbindenden und einer diese trennenden Stellung beweglich ist.

7. Vorrichtung nach Anspruch 6,
dadurch **gekennzeichnet**,
daß der Einsatz (13) relativ zum Rohr (8) axial verschiebbar ist.

8. Vorrichtung nach Anspruch 6,
dadurch **gekennzeichnet**,
daß das Rohr (8) einen kreisförmigen Querschnitt aufweist, und daß der Einsatz (13) einen daran angepaßten, mindestens abschnittsweise kreisförmigen Querschnitt aufweist und relativ zum Rohr (8) verdrehbar ist.

9. Vorrichtung nach Anspruch 8,
dadurch **gekennzeichnet**,
daß der Einsatz (13) umfangsseitige Aussparungen (16) aufweist, zur Bildung eines Freiraumes zwischen Einsatz (13) und Rohr (8), welcher in Unterbrechungsstellung des Einsatzes (13) mit den Öffnungen (10) verbunden ist.

10. Vorrichtung nach einem der vorhergehenden Ansprüche,
dadurch **gekennzeichnet**,
daß die Schalteinrichtung automatisch, insbesondere nach einem vorgebbaren Programm schaltbar ist.
